# EUROPEAN PATENT SPECIFICATION

(11) **EP 4 031 482 B1**
(45) Date of publication and mention of the grant of the patent: **04.12.2024**
(21) Application number: 20866889.7
(22) Date of filing: 18.09.2020
(51) Int. Cl.: A41G 11/00, A41G 11/02, B68G 1/00, D04H 1/02, B32B 3/04, B32B 3/08, B32B 5/02, B32B 5/26, B32B 7/04, B29C 43/22, A47G 9/02, A47G 9/10, B29C 43/24, B29C 43/28

(54) **AN ARTIFICIAL FEATHER FILLING MATERIAL**
KÜNSTLICHES FEDERFÜLLMATERIAL
MATÉRIAU DE REMPLISSAGE DE PLUMES ARTIFICIELLES

(30) Priority: 20.09.2019 SE 1951062
(43) Date of publication of application: 27.07.2022
(73) Proprietor: Inter IKEA Systems B.V., 2616 LN Delft (NL)
(72) Inventor: HAGGARD, Jeffrey Scott, Cocoa, Florida 32926 (US); DE LA HOZ, Angel Antonio, Melbourne, Florida 32901 (US); BERGNER, Anders, 302 93 Halmstad (SE)
(74) Representative: Ström & Gulliksson AB
(86) International application number: PCT/SE2020/050873
(87) International publication number: WO 2021/054888

(56) References cited:
- EP-A1- 1 067 227
- WO-A1-99/16705
- JP-U- S5 575 627
- US-A- 3 395 066
- US-A- 4 259 400
- US-A- 5 585 161
- No further relevant documents disclosed

## Description

### Technical field

The present invention relates to an artificial feather filling material to be used in e.g. pillow and quilts, to replace, or at least supplement, natural feathers. Further, the invention relates to a method for producing such an artificial feather filling material. Furthermore, the invention relates to an apparatus for producing such an artificial feather filling material.

### Background

Feathers and down from birds have for long been used as filling material in pillows and quilts. Further, feathers and down have been used as insulation in clothes, e.g. jackets. Especially in pillows, the resilient properties of feathers are more important than their insulation properties. The opposite is applicable in clothing. Further, also down contributes to the resilient properties of pillow, as they provide a memory effect.

Given their origin, various attempts have been made in that art to find alternatives to feathers and down from birds. Some of these alternatives have been drawn to feather or down like materials, thus focusing on structural similarity, whereas others have focused on function in the first place. Numerous materials have indeed been provided as an alternative to down for insulation in clothing. However, such materials, while having good insulation properties, have found less use as filling material for pillows and quilts, in particular for pillows. Further, the functional properties provided by feathers in filling materials are quite distinct from the properties provided by down. As already mentioned, the resilient but still soft feeling provided by feathers in pillows is a desired property.

It would thus be desired to provide an artificial feather filling material to be used in e.g. pillow and quilts, to replace, or at least supplement, natural feathers in such applications.

In the art, some examples of artificial feathers and downs are known. In EP 0 620 185 A1, a thermal insulating unit comprising an elongate support member having a linear density of from about 5 to 150 mg/m and having attached thereto a generally dispersed array of discrete fine fibers having diameters of from about 1.0 to 25.0 micrometers is disclosed. An assembly of the thermal insulating units is alleged to provide a very low-density filling material having thermal and mechanical properties similar to that of natural down. As already mentioned, the mechanical properties of down is distinct from the ones of feathers. Further, US 4,259,400 discloses a fibrous padding material simulating natural down for quilted articles. The material is in the form of an element of defined length and of low thickness relative to its width. The element comprises a central filiform core to which are bonded fibers, which are oriented substantially transversely relative to this core to form barbs extending from the core. Similar to EP 0 620 185 A1, also US 4,259,400 is drawn to artificial down. In US 4,259,400, it is stated that the artificial down may replace down and provide comparable bulk and insulation.

Thus, there is a need in the art for artificial feathers to be used as filling material in e.g. pillows and quilts.

### Summary

Accordingly, there is, according to a first aspect, provided an artificial feather filling material. The artificial feather filling material comprises artificial feathers. According to an embodiment, the artificial feather filling material is used to fill a pillow, a quilt, a sleeping bag, or cushion member. Another aspect relates to an article, such as a pillow, a quilt, a sleeping bag, or cushion member, filled with the present artificial feather filling material.

The artificial feathers of the artificial feather filling material comprises a first sheet of a first nonwoven material, the nonwoven material being a bonded material. A filament is arranged along one extension of said sheet. The sheet is a strip. The strip may be an essentially rectangular strip. Though a rectangular strip may be square, it is typically longer than it is wide. For a strip, the filament may be arranged centrally along the extension, e.g. the longitudinal extension, of the strip. The filament may be a monofilament, providing a very similar feeling and function as the corresponding part of a natural feather. Further, the filament is bonded to the first sheet. The combination of a more rigid central filament and a sheet of a nonwoven material provides an artificial feather with resilient properties similar to the ones of natural feathers. By supplementing the resilient properties of the filament with a nonwoven material, i.e. a bonded material, also having some resilient properties, the resilient properties are improved. The nonwoven material typically has a surface weight of less than 100 g/m². Further, the nonwoven material is thin. Its thickness may be 1 mm or less

The size of the artificial feather may vary. The feather may be 10 to 100 mm, such as 20-80 mm, such as at least 40 mm, such as less than 80 mm, or even less than 70 mm, or even 40 to 60 mm, long. A too short feather provides less resilience. On the contrary, a too long feather provides too much resilience and may be experienced as stiff. Further, the width of the artificial feather may be 5 to 50 mm, such as 10-40 mm, or 15 to 25 mm. A too wide feather will suffer from its higher weight. Further, a too wide feather interacts less properly with other feathers, and/or down, and the synergistic effect sought may even be lost. As already described, the artificial feather may be rectangular. The resilient properties for a rectangular, artificial feather are more comfortable and combines better with down than quadratic artificial feather. The artificial feather having a rectangular shape may have a longer extension in a direction along the filament, than in a direction perpendicular to the filament. However, to more closely resemble a feather, one, or both ends, of the artificial feather may be triangular. By trimming the end(s) of a rectangular strip, triangular end(s) may be provided.

According to an embodiment, the filament, which may be centrally arranged, has the shape of an arc, i.e. the filament is curved. By providing a curved filament, the resilient properties of the artificial feather is further improved. The arc may be a circular arc. The radius of such a circular arc may be 25 to 400 mm, such as 50 to 200 mm. In terms of producing the artificial feather filling material, it may be preferred if the material arc is a circular arc. A method for producing the artificial feather filling material is outlined further below. The method comprises a calender, which may be operated to curve the filament.

Further, the artificial feather may also be curved in an extension not parallel, but e.g. perpendicularly, to the filament, which may be centrally arranged. By curving the artificial feather in a further extension, the resilient properties may be further improved. Further, an artificial feather being curved in one or more extensions, will be less dense and provide a less compact filling, thereby giving higher filling power. According to an embodiment, the cross-section of the sheet, perpendicular to the extension of the filament, which may be centrally arranged, is curved at, at least one side of the filament, but typically at both sides. The curvature of the curved cross-section of the sheet may have the shape of circular arc. The radius of such a circular arc may be 25 to 250 mm, such as 40 to 150 mm.

While the artificial feather may comprise only one sheet, such as a strip, of a nonwoven material, it is preferred to provide the artificial feather as a sandwich construction, wherein the filament is arranged between the first sheet of a nonwoven material and a second sheet of a nonwoven material. Such sandwich construction will improve the resilient properties further. Furthermore, the feeling of the filament will be less apparent when embedded between two nonwoven materials. In addition, the risk of separating the filament from the first sheet of a nonwoven material is decreased. According to an embodiment, the artificial feather thus comprises a second sheet, such as a strip, of a second nonwoven material. The filament may be arranged in between the first and the second sheets of nonwoven material(s). The filament is bonded, such as melt bonded, also to the second sheet.

Furthermore, the first sheet may be bonded, such as melt bonded, to the second sheet. By binding the first and the second sheets of nonwoven material(s) to each other, the resilient properties are further improved. Furthermore, also the structural integrity of the artificial feather is improved. In addition, the mechanical strength in the bond between the monofilament and nonwoven is improved. The bonding of the first sheet of nonwoven material to the second sheet may be at discrete locations, at parts of the total area of the sheets, or over the entire area of the sheets. According to an embodiment, the first sheet is bonded to the second sheet. The bonding may take the form of a multitude of bonding lines. The bonding lines may be straight lines. Further, the multitude of bonding lines are typically not parallel with the extension of the filament. Furthermore, the bonding lines are typically neither perpendicular to the extension of the filament. According to an embodiment, the bonding lines are arranged to resemble the barbs in natural feathers, whereby forming feather like, fish-bone pattern together with the filament, which preferably is arranged centrally.

As already described, the sheet(s) of nonwoven material(s) in the artificial feather provides resilient properties to the artificial feather. Nonwoven materials are known to the skilled person. They are fabric-like material comprising fibers bonded together. As recognized by the skilled person, a nonwoven is a sheet of fibers, continuous filaments, or chopped yarns of any nature or origin, that have been formed into a web by any means, and bonded together by any means, with the exception of weaving or knitting. Further information regarding nonwoven may be found in the ISO standard 9092:2019. In the present artificial feather, thin nonwoven materials are typically employed. The nonwoven material may be nonwoven material according to the definition in the ISO standard 9092:2019. According to an embodiment, the first nonwoven material, and/or the second nonwoven material, has a surface weight of 1 to 50 g/m², such as 5 to 30 g/m². If the artificial feather is provided as a sandwich construction, the first nonwoven material, and the second nonwoven material may be the same kind of material. However, the second sheet may also be of another nonwoven material than the first sheet. This may provide the artificial feather with other resilient properties.

According to an embodiment, the first nonwoven material, and/or the second nonwoven material is a spunbonded nonwoven, i.e. spunlaid, heat-bonded nonwoven. The nonwoven material may also be bonded by water entanglement. While less preferred due to the somewhat greater thickness, the nonwoven material may also be bonded by needling. Further, the nonwoven material may also be bonded by a chemical bonding agent i.e. as a "resin" added as powder for thermal activation or a dissolved resin applied by spraying or in a foulard. Furthermore, combinations of bonding methods may also be used, e.g. water entanglement and thermal or resin bonding.

The fibers in the first nonwoven material, and/or the second nonwoven material, are typically thin fibers, as the employed nonwoven material(s) typically is/are thin (the thickness of the fibers defines the minimum thickness of the nonwoven material). The fibers are typical polymer fibers. Various polymers may be used in a fiber for the nonwoven material. The polymer may be a polyester, a polyamide, or a olefin. Specific examples of polymers comprise PET (polyethylene terephthalate), PBT (polybutylene terephthalate), PTT (polytrimethylene terephthalate), PEF (polyethylene furanoate), PLA (polylactic acid), PA 6, PA 11, PA 12, PA 4,6, PA 4, 10, PA 5,10, PA 6,6, PA 6,10, PA δ,12, PA 12,12, PP (polypropylene), PE (polyethylene), and co-polymers thereof.

According to an embodiment, the first nonwoven material, and/or the second nonwoven material, comprises fibers having a linear density of 0.5 to 10 dtex, such as 1 to 5 dtex. According to an embodiment, the first nonwoven material, and/or the second nonwoven material, such as a spunbond or meltblown nonwoven material, comprises fibers having an average diameter of 0. 1 µm to 30 µm. A spunbond nonwoven material may comprise fibers having an average diameter of at least 5 µm, such as 5 µm to 30 µm, or even less than 20 µm, such as 10 to 20 µm. A meltblown nonwoven material may comprise fibers having an average diameter of at least 0.1 µm, such as at least 0.25 µm, or 0. 1 µm to 15 µm, such as 0.25 to 10 µm or 1 to 5 µm. To improve the bonding strength between the filament and first nonwoven material, and/or the second nonwoven material, the nonwoven material may comprise a bonding fiber, e.g. a bi-component fiber comprising one bonding polymer with lower melting point than the other component. The bi-component fiber may be sheath-core bi-component fiber. In a bonding fiber in form of a sheath-core bi-component fiber, the sheath may comprise a polymer having a melting point of at least 20°C lower than the melting point of a polymer in the core. The core may comprise a polyester and have a melting point of at least 220°C. Further, the sheath may have a melting point of less than 200°C, such as between 110°C and 190°C. The surface weight of the first nonwoven material, and/or the second nonwoven material, may be 1 to 50 g/m², such as 5 to 30 g/m², or 5 to 20 g/m², or even 8 to 15 g/m². A nonwoven material with too low surface weight may not provide sufficient resilience to provide the desired comfort. However, an artificial feather filling material, comprising a nonwoven material with too high surface weight may be experienced as heavy and dense.

The filament is typically somewhat thicker to provide the desired resilient properties. Its largest cross-sectional dimension may be 0.05 to 1 mm, such as 0.1 to 0.6 mm. Typically, the cross-section of the filament is circular. For a filament having a circular cross-section, the diameter may be 0.05 to 1 mm, such as 0.1 to 0.8 mm, or 0.4 to 0.6 mm. A too thin filament may not provide sufficient resilience to provide the desired comfort. The filament may be a hollow filament, such as a hollow bi-component fiber. A hollow filament is lighter, such as 25 to 50% lighter, than a solid monofilament with corresponding diameter. Still a hollow filament may provide the desired resilient properties. However, the flex properties of a hollow filament are somewhat different from the ones of a solid filament. Actually, it was found at least in some embodiments, that the feel of an artificial feather with a hollow filament arranged along one extension of the strip, such as centrally along the longitudinal extension of the strip, may match the feel of the natural feather better than that of an artificial feather with a solid filament.

In order to facilitate bonding of the filament to the sheet(s) of nonwoven material, the filament may be a bi-component fiber, such as a sheath-core bi-component fiber. In an embodiment, according to which the filament is a sheath-core bi-component fiber, the core may comprise a polyester and have a melting point of at least 220°C. Further, the sheath may have a melting point of less than 200°C, such as between 110°C and 190°C.

In the art, natural down and feathers are typically combined to provide the desired resilience and comfort. Similarly, the artificial feather filling material disclosed herein may thus comprise down as well, in addition to the artificial feathers. While the down may be natural bird down, the down is preferably artificial down. Various kinds of artificial down are known in the art (e.g. US 3,892,909, EP 0 067 498, and US 5,851,665). The artificial feather filling material may comprise 5 to 95% by weight of artificial feathers and 5 to 95% by weight of down. Typically, the artificial feather filling material, similar to natural filling materials, comprises more down than artificial feathers, e.g. a higher weight proportion of down than of artificial feathers. Thus, the artificial feather filling material may comprise 5 to 50% by weight of artificial feathers and 50 to 95% by weight of down. According to an embodiment, the artificial feather filling material comprises 10 to 30% by weight of artificial feathers, the balance being down. While the artificial feathers typically consist a minor proportion in the artificial feather filling material, they are still important to provide the desired properties, e.g. resilience; especially the when used in pillows.

According to an embodiment, the artificial feather filling material further comprises artificial down clusters. Each of the down clusters comprises a number of filaments arranged side by side in a bundle. The filaments in the bundle are bonded, e.g. melt bonded, together at one bonding location. In order to increase the bulk of the bundles, the filaments may be crimped. Further, the position of the bonding location may differ between the down clusters. The linear density of the filaments of the artificial down may be 1 to 10 denier, such as 2 to 5 denier (i.e. 1.1 to 11 dtex, such as 2.2 to 5.6 dtex). Alternatively, the linear density of the filaments may be 1 to 10 dtex, such as 2 to 5 dtex. The filaments may be 20 to 100 mm long, such as 40 to 80 mm long.

According to a second aspect, there is provided a method of producing an artificial feather filling material. The artificial feather filling material is typically the kind of artificial feather filling material as described herein above. Thus, features of the artificial feather filling material already described in relation to the artificial feather filling material are equally applicable in relation to the method for producing an artificial feather filling material.

The method of producing an artificial feather filling material comprises the steps of:
- feeding at least one filament and a first web of a fibrous material, wherein the fibrous material is a sheet of nonwoven material, the nonwoven material being a bonded material, to a calender with at least one roller and a heating arrangement for heating the first web;
- forming, downstream or upstream of the calender, at least one ribbon from the first web with the filament arranged along the ribbon,
- bonding, such as melt bonding, the filament to the fibrous material by the calender; and
- cross-cutting the ribbon, comprising the first web of a fibrous material and the filament, to form artificial feathers.

Typically, the method of producing an artificial feather filling material is a continuous process. The first web and the filament(s), respectively may be fed from reels to the calender. The first web of a fibrous material is a sheet of a non woven material. Further, the filament arranged along the ribbon is preferably arranged centrally on the ribbon. The formed feather may thus have the filament arranged centrally along one of its extensions, such as the longitudinal extension.

While only one ribbon may be formed in the method, the method typically comprises forming more than one ribbon to increase the efficiency of the process. According to an embodiment at least two filaments, such as 2, 3, 4, 5, 6, 7, 8, 9, 10, or more filaments, are separately arranged in parallel on the first web to be fed to the heated calender. When more than one filament is arranged on the first web, the method further comprises the step of cutting the first web between the filament s before or after, preferably after, the filament s have been bonded to the fibrous material. By cutting the first web between the filaments in the machine direction (the longitudinal direction) at least two ribbons, each ribbon comprising one filament, is provided. Subsequently, each ribbon is crosscut into artificial feathers.

As outlined above, the artificial feather may be provided as a sandwich construction comprising a first and a second nonwoven material, the filament typically being arranged in between the first and the second nonwoven material. According to an embodiment, the filament being fed to the calender is arranged in between the first web and a second web of a fibrous material. The second web is also typically a sheet of a nonwoven material. It may be un-bonded web comprising carded fibers to be bound in the calender, but preferably the second web is a sheet of a nonwoven material.

As already described herein above, the first web, and the second web are, according to an embodiment, a nonwoven material, such as a spunbonded nonwoven, i.e. spunlaid, heat-bonded nonwoven. The nonwoven material may also be bonded by water entanglement. While less preferred due to the somewhat greater thickness, the nonwoven material may also be bonded by needling.

In the present method, thin webs are typically employed. According to an embodiment, the first web, and/or the second web, has a surface weight of 1 to 50 g/m², such as 5 to 30 g/m².

The fibers in the nonwoven material(s) are typically thin fibers, as the employed nonwoven material(s) typically is/are thin (the thickness of the fibers defines the minimum thickness of the nonwoven material). The fibers are typical polymer fibers. Various polymers may be used in a fiber for the nonwoven material. The polymer may be a polyester, a polyamide, or an olefin. Specific examples of polymers comprise PET (polyethylene terephthalate), PBT (polybutylene terephthalate), PTT (trimethylene terephthalate), PEF (polyethylene furanoate), PLA (polylactic acid), PA 6, PA 1 1, PA 12, PA 4,6, PA 4, 10, PA 5,10, PA 6,6, PA 6,10, PA 6,12, PA 12,12, PP (polypropylene), PE (polyethylene), and co-polymers thereof.

According to an embodiment, the first web, and/or the second web, comprises fibers having a linear density of 0.5 to 10 dtex, such as 1 to 5 dtex. To improve the bonding strength between the filament and first web, and/or the second web, the nonwoven material may comprise a bonding fiber, e.g. a bi-component fiber comprising one bonding polymer with lower melting point than the other component. The bi-component fiber may be sheath-core bi-component fiber. In a bonding fiber in form of a sheath-core bi-component fiber, the sheath may comprise a polymer having a melting point of at least 20°C lower than the melting point of a polymer in the core. The core may comprise a polyester and have a melting point of at least 220°C. Further, the sheath may have a melting point of less than 200°C, such as between 110°C and 190°C.

According to an embodiment, the calender comprises at least two rotating rollers, i.e. a first and a second roller, for calendering the first web and the filament in between them. According to an embodiment, at least one of the rollers is heated. This may be provided for by providing at least one of the rollers with a heater. The heated roller provides for melt bonding the filament to the fibrous material of the first web. The heating arrangement for heating the first web may also be separate from the rollers. It may for example be an IR-heater or a heat fan to heat the first web and the at least one filament.

In order to improve the resilient properties of the artificial feather, the filament may be provided with the shape of an arc. This may be provided for by arranging the first web and optionally the filament to be in contact with a cooling roller arranged downstream of the heating arrangement, e.g. the heated roller, in calendering the first web and the filament, over at least at least 5%, 10%, 25% or 50% of the circumference of the cooling roller. The radius of the cooling roller may be 25 to 400 mm, such as 50 to 200 mm, thus providing an arc with a corresponding radius. The cooling roller, cools the first web and the filament having been heated by the heating arrangement, thereby providing them with a final configuration.

According to an embodiment, the calender comprises at least two rotating rollers, i.e. a first and a second roller, for calendering the first web and the filament in between them. At least one of the rollers may be heated. This may be provided for by providing at least one of the rollers with a heater. The heated roller provides for melt bonding the filament to the fibrous material of the first web. The calender may further comprise a cooling roller arranged downstream of the heating arrangement, e.g. a roller provided with a heater. The cooling roller, cools the first web and the filament having been heated by the heating arrangement, thereby providing them with a final configuration. In order to affect the resilient properties of the artificial feather, the diameter of the cooling roller may vary along its longitudinal extension. As an example, the cooling roller may be undulating along its longitudinal extension. By employing a cooling roller, whose diameter varies along its longitudinal extension, the cross-section of the ribbon(s) of the first web, as seen in a direction perpendicular to the extension of filament, at each side of the filament becomes curved. The curvature may take the shape of circular arc.

According to an embodiment, the calender comprises at least two rotating rollers, i.e. a first and a second roller, for calendering the first web and the filament in between them. At least one of the rollers may be heated. Further, at least one of the rollers may be embossed. The embossing implies that the first web is provided with a pattern. The pattern may be a multitude of lines. As already described, the pattern may be a feather like, fish-bone pattern. Furthermore, in an embodiment according to which the filament fed to the calender is arranged in between the first web and a second web of a fibrous material, the pattern may be bonding pattern, if the first web is melt bonded to the second web.

According to a third aspect, there is provided an apparatus for producing an artificial feather filling material. The apparatus comprises at least two rotatable rollers, for calendering a first web of a fibrous material and a filament in between them, and a heating arrangement for heating the first web of a fibrous material to be calendered, whereby melt bonding the filament to the first web. Preferably, at least one of the rollers is provided with a heater. However, the heating arrangement for heating the first web may also be separate from the rollers. It may for example be an IR-heater or a heat fan to heat the first web and the at least one filament. Further, the apparatus comprises a first cutting arrangement for cutting the first web into ribbons with at least one filament arranged along each of the ribbons. Preferably, the filament is arranged centrally along each of the ribbons. The first cutting arrangement may be provided with a first cutting edge for cutting the first web. As the first web passes through the first cutting arrangement, the first cutting edge may be stationary. In order to improve the cutting efficiency, the cutting edge may be moveable in a direction perpendicular to the extension of the first nonwoven web material and may thus act in a saw like manner. As the web to be cut typically is a bonded fibrous material, e.g. a nonwoven material, use of a simple eyelet may result in the material being torn apart. The first cutting arrangement is arranged either upstream or downstream, such as downstream, of the rotatable rollers. The first cutting arrangement may also be a laser cutting arrangement. Use of laser to cut the first web into ribbons may require less maintenance as the laser does not become worn out. Further, laser may serve to weld the edges of the ribbon, thereby reducing the risk of possible unwanted fringe forming.

Further, the apparatus comprises a second cutting arrangement. The second cutting arrangement is arranged downstream of the first cutting arrangement and the rotatable rollers. The second cutting arrangement provides for cross-cutting the ribbons into artificial feathers. The second cutting arrangement may be provided with a second cutting edge for cross-cutting the ribbons into artificial feathers. As the ribbons are to be cut in direction not parallel with the longitudinal extension of the ribbons, i.e. machine direction, the second cutting edge is moveable. According to an embodiment, the second cutting edge is moveable in the same direction as the extension of the first nonwoven web material. Typically, the second cutting edge is moveable in a direction perpendicular to the longitudinal extension of the ribbons, i.e. perpendicular to the machine direction. According to an alternative embodiment, the second cutting edge is moveable in a direction perpendicular to the extension of the first nonwoven web material. The second cutting arrangement may be a laser cutting arrangement. Use of laser to cut the ribbons into artificial feathers may require less maintenance as the laser does not become worn out. Further, the laser may serve to weld the edges of the ribbon.

The apparatus further comprises a rotatable, cooling roller arranged downstream of the heating arrangement, e.g. a roller provided with a heater. The cooling roller, cools the first web and the filament having been heated by the heating arrangement, thereby providing them with a final configuration. The apparatus is configured to be operated such that the cooling roller is in contact with the first web of the fibrous material and optionally the filament over at least 5%, 10%. 25% or 50% of its circumference in calendering the first web of the fibrous material and the filament. As already described herein above, this provides for improving the resilient properties of the artificial feather filling material.

Further, the diameter of the cooling roller may vary along its longitudinal extension. As an example, the cooling roller may be undulating along its longitudinal extension. As already described herein above, this provides for affecting the resilient properties of the artificial feather filling material.

Furthermore, preferably at least one of the rollers of the calender is embossed.

Although the present invention has been described above with reference to specific embodiments, it is not intended to be limited to the specific form set forth herein. Rather, the invention is limited only by the accompanying claims and other embodiments than the specific embodiments described above are equally possible within the scope of these appended claims.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous.

In addition, singular references do not exclude a plurality. The terms "a", "an", "first", "second" etc. do not preclude a plurality.

### Brief description of the drawings

These and other aspects, features and advantages of which the invention is capable of will be apparent and elucidated from the following description of embodiments of the present invention, reference being made to the accompanying drawings, in which:
**Fig. 1** shows a perspective view of an artificial feather according to an embodiment;
**Figs. 2a****-c** show different views, including two cross-sections (Fig. 2b and Fig. 2c), of the artificial feather in Fig. 1;
**Fig. 3** shows a schematic cross section of an apparatus for producing an artificial feather filling material, according to an embodiment;
**Fig. 4** shows the apparatus in Fig. 3 seen from above;
**Fig. 5a****-b** show different views of a roller with recesses;
**Fig. 6** shows a perspective view of an embossed roller with recesses; and
**Fig. 7a****-d** shows a perspective view of a roller being undulating along its longitudinal extension and its cross-sections (Fig. 7b, Fig. 7c and Fig. 7d).
**Fig. 8** shows a photograph of an artificial feather according to an embodiment. The ruler alongside the artificial feather shows its dimensions in centimeters.

### Detailed description

The following description focuses on an embodiment of the present invention applicable to an artificial feather filling material. However, it will be appreciated that the invention is not limited to the specific exemplary embodiment described.

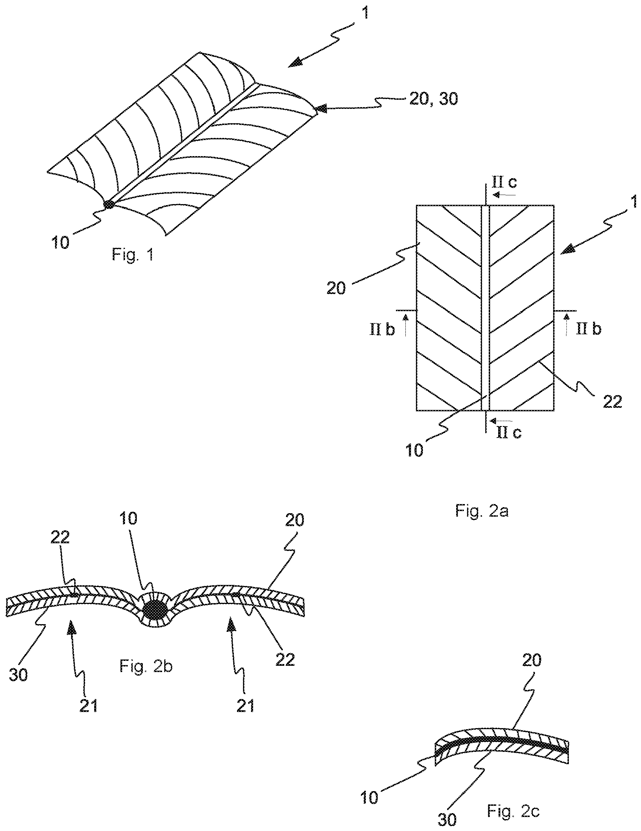

The artificial feather filling material comprises a plurality of artificial feathers 1. As can be seen in Fig. 1, the individual artificial feather 1, according to an embodiment, comprises a first strip 20 of a first nonwoven material. A filament 10, which in the illustrated embodiment is a monofilament, is arranged centrally along one extension, e.g. the longitudinal extension, of the strip 20. The filament 10 is bonded to the first strip 20.

Fig. 2a is a top view of the artificial feather 1 of Fig. 1. Fig. 2b is a cross-section taken along line II b-II b of Fig. 2a, and Fig. 2c is a cross-section taken along line II c-II c of Fig. 2a. As can be seen in Fig. 2b, the artificial feather 1, according to an embodiment, comprises a second strip 30 of a second nonwoven material. The filament 10 is arranged in between the first strip 20 and the second strip 30. Further, the cross-section of the strips 20, 30, perpendicular to the extension of the centrally arranged filament 1, at each side of the centrally arranged filament 1, is curved. The curvature 21 of the curved cross-section of the strips 20, 30 may have the shape of circular arc. Hence, in the perspective of Fig. 2b the artificial feather 1 has a shape resembling that of a flying seagull, as seen from the head. Further, as can be seen in Fig. 2c, the filament 10, according to an embodiment, has the shape of an arc. The curvature 11 of the arc shaped filament 10 may have the shape of a circular arc. Furthermore, as can be seen in Fig. 2a, the first strip 20 may be bonded to the second strip 30 by a multitude of bonding lines 22 arranged to resemble the barbs in natural feathers, whereby forming a forming a feather like, fish-bone pattern together with the centrally arranged filament.

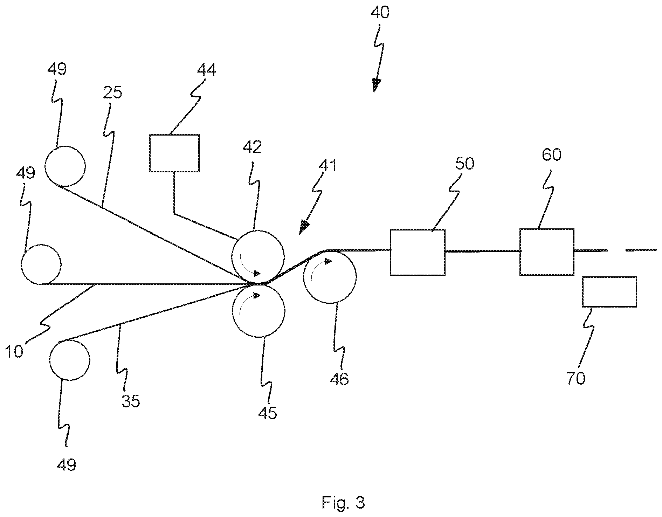

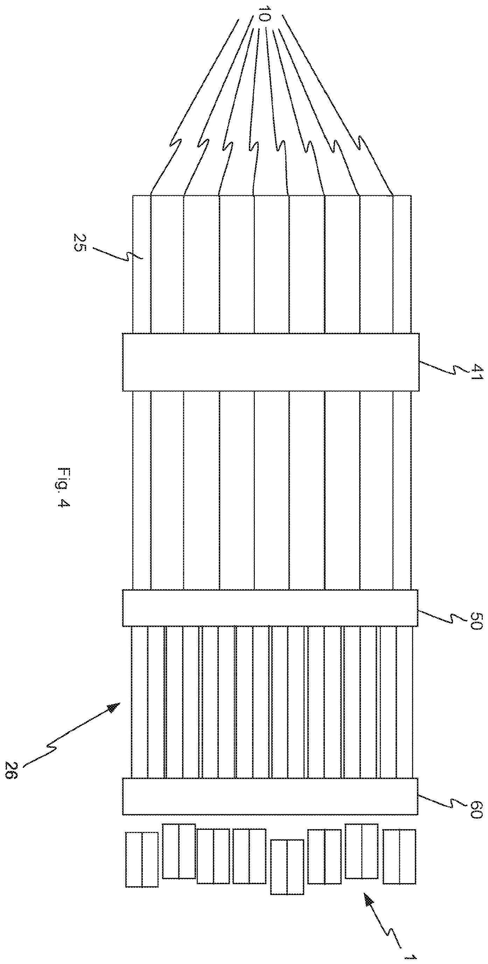

In Figs. 3 and 4, an apparatus 40 for producing an artificial feather filling material, according to an embodiment, is shown. The apparatus comprises a calender 41 with at least two rotatable rollers 42, 45 and a rotatable, cooling roller 46, arranged downstream of the at least two rotatable rollers 42, 45. A heating arrangement 44 is provided, and in the illustrated embodiment this is accomplished by means of least one of the rollers 42, 45 being provided with a heater 44. The apparatus 40 is arranged for feeding a first web 25 of a fibrous material, a filament 10, and a second web 35 of a fibrous material to the calender 41 from reels 49. The filament 10 may be sheath-core bi-component fiber. The core in the sheath-core bi-component fiber may comprise a polyester (e.g. PET) and have a melting point of approx. 265°C. Further, the sheath, in the sheath-core bi-component fiber, may comprise a co-polyester (e.g. co-PET) and have a melting point of approx. 180°C. The first web 25 of the fibrous material, as well as the second web 35 of a fibrous material, may be PET spunbond of approx. 10 gsm.

In feeding the first web 25, the filament 10, and the second web 35 to the calender 41, the filament 10 is fed between the first web 25 and the second web 35. Further, the calender 41 is arranged for calendering the first web 25, the filament 10, and the second web 35 in between the two rotatable rollers 42, 45. In calendering the first web 25, the filament 10, and the second web 35, the filament 10 is melt bonded to the first web 25 and to the second web 35, respectively. The apparatus 40 further comprises a first cutting arrangement 50 for cutting the first web 25 material, and the second web 35 material if present, into ribbons 26 with one filament 10 arranged centrally at each of the ribbons 26. The first cutting arrangement 50 is arranged downstream of the rotatable rollers 42, 45, but may, in alternative embodiments, be placed upstream of the rotatable rollers 42, 45, or may even be integrated in the rotatable rollers 42, 45. Typically, the cooling roller 46 is arranged upstream of the first cutting arrangement 50. After having passed the heating arrangement 44 to melt bond the filament 10 to the first web 25, the first web 25 and the filament 10 are brought into contact with the cooling roller 46 to cool them, thereby providing them with an arced configuration. In Fig. 3, the first web 25 and the filament 10 are in contact with the cooling roller 46 over about 10% of the circumference of the cooling roller 46. The contact may however preferably be more than 10% of the circumference of the cooling roller 46.

Furthermore, the apparatus 40 comprises a second cutting arrangement 60 for cross-cutting the ribbons 26 into artificial feathers 1. The second cutting arrangement 60 is arranged downstream of the first cutting arrangement 50 and the rotatable rollers 42, 45. Downstream of the second cutting arrangement 60 a collection station 70 is arranged, which gathers the produced artificial feathers 1 into an artificial feather filling material.

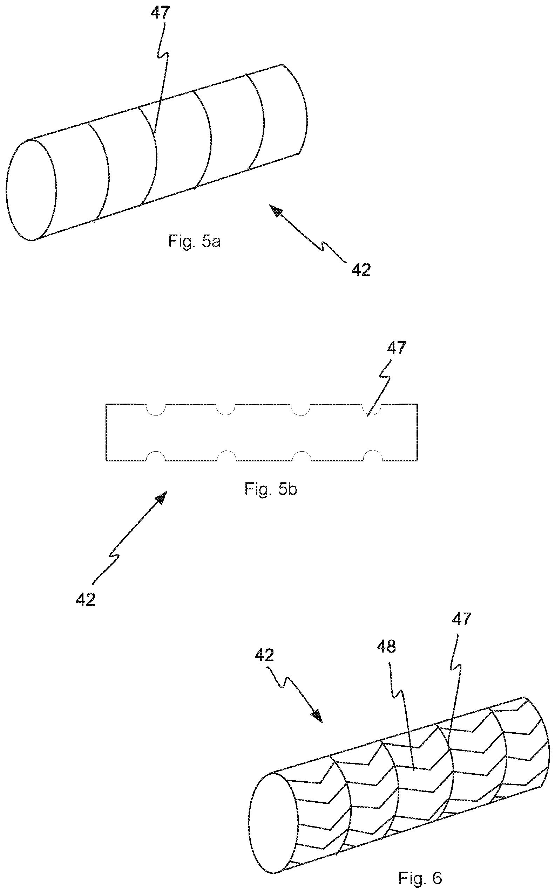

A roller 42, according to an embodiment, is shown in Fig. 5a. The roller 42 is provided with recesses 47 along its perimeter for receiving the filaments 10, being thicker than the first and second web 25, 35. The cross-section (cf. Fig. 5b) of each recess 47 may be semicircular to conform to the filament 10. By providing at least one of the rotatable rollers 42, 45 with recesses along its perimeter for receiving the filaments 10, the calendering of the first and second web 25, 35 becomes more effective if the filament 10 not separates the rotatable rollers 42, 45. Further, the recesses 47 should be sufficiently shallow to allow for the filaments 10, the first web 25, and second web 35 to be pressed together in calendering them.

A roller 42, according to another embodiment, is shown in Fig. 6. Apart from the recesses 47 shown in Fig. 5, the roller 42 is embossed. The embossment serves to provide the artificial feathers 1 with a feather like, fish-bone pattern 48.

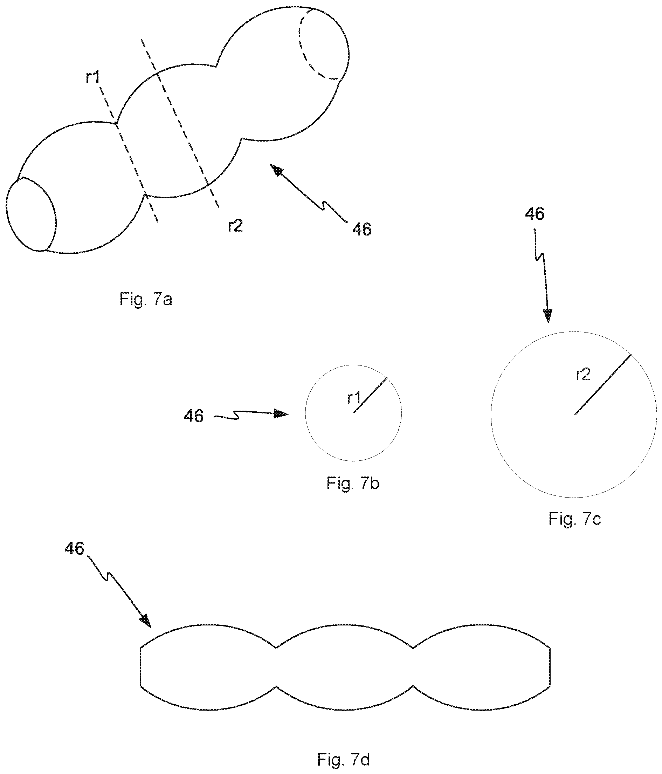

A cooling roller 46, according to another embodiment, is shown in Fig. 7a-d. The radius (r₁, r₂) of the cooling roller 46 varies along its longitudinal extension (cf. Figs. 7b and 7c, showing two radial cross-sections of the cooling roller 46), the cooling roller 46 being undulating along its longitudinal extension (cf. Fig. 7d showing a longitudinal cross-section of the cooling roller 46).

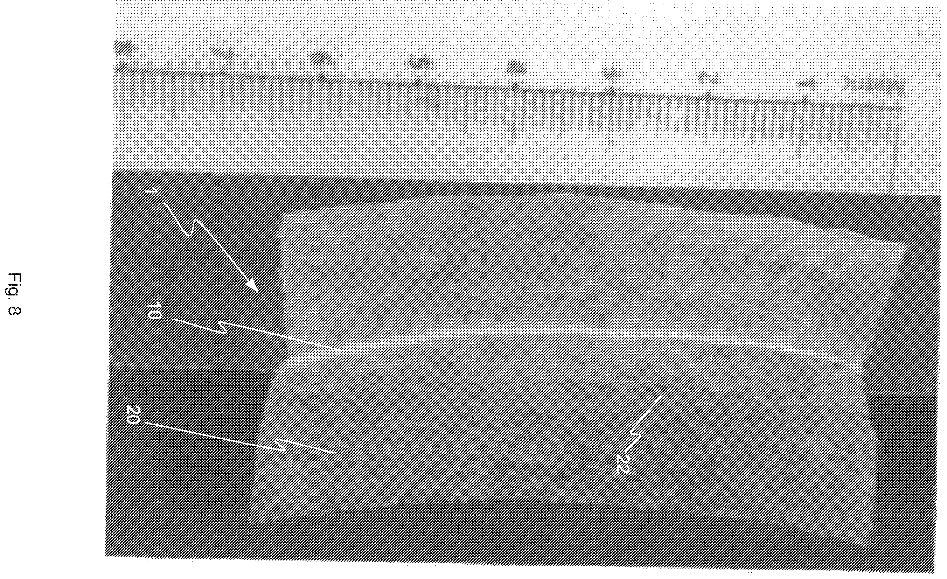

In Fig. 8, a photograph of an artificial feather according to an embodiment related to the one in Fig. 2 is provided. The first strip 20 of the first nonwoven material and the filament 10 are indicated in the photograph. Further, one the bonding lines 22 has also been indicated. This feather is about 60 mm long and about 36 mm wide. The non-woven is a 10 m/m²spunbond.

In order to provide an artificial feather filling material for a pillow, the artificial feather in Fig. 3 may be combined with artificial down according to e.g. example 2 in US 5,851,665 (cf. Fig. 1B therein). In combining artificial feathers and artificial down to provide an artificial filling material for e.g. a pillow, a higher weight proportion of down than of artificial feathers is typically used. Thus, an artificial filling material for e.g. a pillow may comprise about 20% by weight of artificial feathers and 80% by weight of artificial down. The proportion of artificial down may in some embodiments be even higher, such as up to 95% by weight.

## Claims

1. An artificial feather filling material, comprising artificial feathers (1) each comprising a first sheet (20) of a first nonwoven material, the nonwoven material being a bonded material, wherein a filament (10) is arranged along one extension of said sheet, the filament (10) being bonded to the first sheet (20), wherein the first sheet is a strip, the filament being arranged along the longitudinal extension of said strip.

2. The artificial feather filling material according to claim 1, wherein the filament (10), such as a monofilament, is arranged centrally along the longitudinal extension of said strip; and/or wherein the filament (10) is melt bonded to the first sheet (20) of a first nonwoven material.

3. The artificial feather filling material according to claim 1 or 2, wherein the artificial feather (1) further comprises a second sheet (30), such as a strip, of a second nonwoven material, the filament (10) being arranged in between the first (20) and the second (30) sheets of nonwoven material(s), wherein the filament (10) is bonded, such as melt bonded, also to the second sheet (30); preferably the first sheet (20) being bonded to the second sheet (30); more preferably the first sheet (20) being melt bonded to the second sheet (30).

4. The artificial feather filling material according to claim 3, wherein the first sheet (20) is bonded to the second sheet (30), the bonding taking the form of a multitude of bonding lines (22); preferably the bonding lines (22) being arranged to resemble the barbs in natural feathers, whereby forming a feather like, fish-bone pattern together with the filament (10).

5. The artificial feather filling material according to any one of claims 1 to 4, wherein the first nonwoven material, and the second nonwoven material, if present:
- has a surface weight of 1 to 50 g/m², such as 5 to 30 g/m²; and/or
- is a spunbonded and/or meltblown nonwoven; and/or
- comprises fibers having a linear density of 0.5 to 10 dtex, such as 1 to 5 dtex; and/or comprises fibers having an average diameter of 0.1 µm to 30 µm, such as 5 µm to 30 µm for spunbonded nonwoven, or 0.1 µm to 15 µm for a meltblown nonwoven; and/or
wherein the filament (10) is a bi-component fiber, such as a sheath-core bi-component fiber, and/or the filament (10) is hollow, and/or the filament (10) has a largest cross-sectional dimension of 0.05 to 1 mm; preferably 0.4 to 0.6 mm.

6. The artificial feather filling material according to claim 5, wherein the filament (10) is a sheath-core bi-component fiber, the sheath comprising a polymer having a melting point of at least 20°C lower than the melting point of a polymer in the core; preferably the core comprising a polyester having a melting point of at least 220°C, and the sheath having a melting point of less than 200°C, such as between 110°C and 190°C.

7. The artificial feather filling material according to any one of claims 1 to 6, wherein the filament (10) has the shape of an arc, such as a circular arc; preferably the radius being 25 to 400 mm, such as 50 to 200 mm; and/or
wherein the cross-section of the first sheet (20) perpendicular to the extension of the filament (10), at each side of the filament (10), is curved; the curvature (21) preferably having the shape of circular arc, preferably the cross-section of the artificial feather (1), as seen perpendicular to the extension of the filament (10), has the shape of a flying seagull, as seen from the head.

8. The artificial feather filling material according to any one of claims 1 to 7, wherein the artificial feather filling material further comprises down; preferably the down being artificial down, preferably the artificial feather filling material comprising 5 to 95% by weight of artificial feathers and 5 to 95% by weight of down, such as 5 to 50% by weight of artificial feathers and 50 to 95% by weight of down, and/or the artificial feather filling material comprising a higher weight proportion of down than of artificial feathers, and/or the artificial feather filling material comprising 10 to 30% by weight of artificial feathers and the balance being down.

9. The artificial feather filling material according to claim 8, wherein the artificial feather filling material further comprises artificial down clusters, wherein each of the down clusters comprises a number of filaments arranged side by side in a bundle, the filaments being melt bonded together at one bonding location; preferably the filaments being crimped.

10. An article filled with the artificial feather filling material according to any one of claims 1 to 9, the article being selected from the group consisting of a pillow, a quilt, a sleeping bag, and a cushion member.

11. A method of producing an artificial feather filling material, said process comprising the steps of:
- feeding at least one filament (10) and a first web (25) of a fibrous material, wherein the fibrous material is a sheet of nonwoven material, the nonwoven material being a bonded material, to a calender (41) with at least one roller (42) and a heating arrangement (44) for heating the first web;
- forming, downstream or upstream of the calender (41), at least one ribbon (26) from the first web (25) with the filament (10) arranged along the ribbon (26);
- bonding, such as melt bonding, the filament (10) to the fibrous material by the calender (41); and
- cross-cutting the ribbon (26) and the filament (10) to form artificial feathers (1).

12. The method of producing an artificial feather filling material according to claim 11, wherein the filament (10) is arranged centrally on the ribbon (26); and/or the filament (10) being fed to the calender (41) is arranged in between the first web (25) and a second web (35) of a fibrous material.

13. The method of producing an artificial feather filling material according to claim 11 or 12, wherein the calender (41) comprises at least two rotating rollers (42, 45) for calendering the first web (25) and the filament (10) in between them, at least one of the rollers (42, 45) being heated, the calender (41) further comprising a cooling roller (46) arranged downstream of the at least one roller (42, 45) being heated, preferably the radius of the cooling roller (46) being 25 to 400 mm, such as 50 to 200 mm,
wherein the calender (41) is arranged such that the first web (25) and optionally the filament (10) is in contact with the cooling roller (46) over at least at least 5%, 10%, 25% or 50% of its circumference in calendering them, thereby providing the filament (10) with the shape of an arc; and/or
wherein the diameter of the cooling roller (46) varies along its longitudinal extension, whereby the cross-section of the ribbon(s) (26), as seen in a direction perpendicular to the extension of filament (10), at each side of the filament (10) being curved, preferably the curvature (21) having the shape of circular arc.

14. The method of producing an artificial feather filling material according to anyone of claims 11 to 13, wherein the calender (41) comprises at least two rotating rollers (42 ,45) for calendering the first web (25) and the filament (10) between them, at least one of the rollers (42, 45) being heated, wherein at least one of the rollers (42, 45) is embossed, whereby the first web (25) is provided with a pattern, such as a feather like, fish-bone pattern; preferably the first web (25) is melt bonded to a second web (35) of a fibrous material, if the filament (10) being fed to the calender (41) is arranged in between the first web (25) and a second web (35) of a fibrous material.

15. The method of producing an artificial feather filling material according to any one of claims 11 to 14, wherein at least two filaments (10) are separately arranged in parallel on the first web (25) to be fed to the heated calender (41), the method further comprising the step of cutting the first web (25) between the filaments (10) before or after, preferably after, the filaments (10) have been bonded to the first web (25), whereby providing at least two ribbons (26), each ribbon (26) comprising one filament (10), wherein the at least two ribbons (26) are being cut into artificial feathers (1) subsequently to cutting the first web (25) between the filaments (10).

16. An apparatus (40) for producing an artificial feather filling material, the apparatus (40) comprising and at least two rotatable rollers (42, 45) for calendering the first web (25) of a fibrous material and a filament (10) in between them and a heating arrangement (44) for heating the first web (25) of a fibrous material to be calendered, thereby melt bonding the filament (10) to the first web (25), preferably at least one of the rollers (42, 45) being provided with a heater (44), the apparatus (40) further comprising a first cutting arrangement (50) for cutting the first web (25) into ribbons (26) with one filament (10) arranged along each of the ribbons (26), the first cutting arrangement (50) being arranged either upstream or downstream of the rotatable rollers (42, 45), and a second cutting arrangement (60), arranged downstream of the first cutting arrangement (50) and the rotatable rollers (42, 45), for cross-cutting the ribbons (26) into artificial feathers (1), wherein the apparatus (40) comprises a cooling roller (46) arranged downstream of the heating arrangement (44), the apparatus (40) being configured to be operated such that the cooling roller (46) is in contact with the first web (25) of the fibrous material and optionally the filament (10) over at least 5%, 10%, 25%, or 50% of its circumference in calendering the first web (25) of the fibrous material and the filament (10); preferably at least one of the rollers (42, 45) of the calender being embossed.

## Patentansprüche

1. Künstliches Federfüllmaterial, umfassend künstliche Federn (1), die jeweils eine erste Lage (20) aus einem ersten Vliesmaterial umfassen, wobei das Vliesmaterial ein verbundenes Material ist, wobei ein Filament (10) entlang einer Verlängerung der Lage angeordnet ist, wobei das Filament (10) mit der ersten Lage (20) verbunden ist, wobei die erste Lage ein Streifen ist, wobei das Filament entlang der Längserstreckung des Streifens angeordnet ist.

2. Künstliches Federfüllmaterial nach Anspruch 1, wobei das Filament (10), wie etwa ein Monofilament, mittig entlang der Längserstreckung des Streifens angeordnet ist; und/oder wobei das Filament (10) mit der ersten Lage (20) aus einem ersten Vliesmaterial schmelzverbunden ist.

3. Künstliches Federfüllmaterial nach Anspruch 1 oder 2, wobei die künstliche Feder (1) ferner eine zweite Lage (30), wie etwa einen Streifen, aus einem zweiten Vliesmaterial umfasst, wobei das Filament (10) zwischen der ersten (20) und der zweiten (30) Lage aus Vliesmaterial(ien) angeordnet ist, wobei das Filament (10) auch mit der zweiten Lage (30) verbunden, wie etwa schmelzverbunden, ist; wobei vorzugsweise die erste Lage (20) mit der zweiten Lage (30) verbunden ist; wobei mehr bevorzugt die erste Lage (20) mit der zweiten Lage (30) schmelzverbunden ist.

4. Künstliches Federfüllmaterial nach Anspruch 3, wobei die erste Lage (20) mit der zweiten Lage (30) verbunden ist, wobei die Verbindung die Form einer Vielzahl von Verbindungslinien (22) annimmt; wobei vorzugsweise die Verbindungslinien (22) so angeordnet sind, dass sie den Widerhaken in natürlichen Federn ähneln, wodurch sie zusammen mit dem Filament (10) ein federähnliches Fischgrätenmuster bilden.

5. Künstliches Federfüllmaterial nach einem der Ansprüche 1 bis 4, wobei das erste Vliesmaterial und das zweite Vliesmaterial, falls vorhanden:
- ein Flächengewicht von 1 bis 50 g/m², wie etwa 5 bis 30 g/m², aufweist; und/oder
- ein Spinnvlies und/oder schmelzgeblasenes Vlies ist; und/oder
- Fasern mit einer linearen Dichte von 0,5 bis 10 dtex, wie etwa 1 bis 5 dtex, umfasst; und/oder Fasern mit einem durchschnittlichen Durchmesser von 0,1 µm bis 30 µm, wie etwa 5 µm bis 30 µm für ein Spinnvlies, oder 0,1 µm bis 15 µm für ein schmelzgeblasenes Vlies umfasst; und/oder
wobei das Filament (10) eine Bikomponentenfaser, wie etwa eine Mantel-Kern-Bikomponentenfaser, ist und/oder das Filament (10) hohl ist und/oder das Filament (10) eine größte Querschnittsabmessung von 0,05 bis 1 mm; vorzugsweise 0,4 bis 0,6 mm, aufweist.

6. Künstliches Federfüllmaterial nach Anspruch 5, wobei das Filament (10) eine Mantel-Kern-Bikomponentenfaser ist, wobei der Mantel ein Polymer mit einem Schmelzpunkt von mindestens 20 °C niedriger als der Schmelzpunkt eines Polymers in dem Kern umfasst; wobei der Kern vorzugsweise ein Polyester mit einem Schmelzpunkt von mindestens 220 °C umfasst und der Mantel einen Schmelzpunkt von weniger als 200 °C, wie etwa zwischen 110 °C und 190 °C, aufweist.

7. Künstliches Federfüllmaterial nach einem der Ansprüche 1 bis 6, wobei das Filament (10) die Form eines Bogens, wie etwa eines Kreisbogens, aufweist; wobei der Radius vorzugsweise 25 bis 400 mm, wie etwa 50 bis 200 mm, beträgt; und/oder
wobei der Querschnitt der ersten Lage (20) senkrecht zu der Erstreckung des Filaments (10) auf jeder Seite des Filaments (10) gekrümmt ist; wobei die Krümmung (21) vorzugsweise die Form eines Kreisbogens aufweist, wobei der Querschnitt der künstlichen Feder (1), senkrecht zu der Erstreckung des Filaments (10) gesehen, vorzugsweise die Form einer fliegenden Möwe, von dem Kopf aus gesehen, aufweist.

8. Künstliches Federfüllmaterial nach einem der Ansprüche 1 bis 7, wobei das künstliche Federfüllmaterial ferner Daunen umfasst; wobei es sich bei den Daunen vorzugsweise um künstliche Daunen handelt, wobei das künstliche Federfüllmaterial vorzugsweise 5 bis 95 Gew.-% künstliche Federn und 5 bis 95 Gew.-% Daunen, wie etwa 5 bis 50 Gew.-% künstliche Federn und 50 bis 95 Gew.-% Daunen, umfasst und/oder wobei das künstliche Federfüllmaterial einen höheren Gewichtsanteil an Daunen als an künstlichen Federn umfasst und/oder wobei das künstliche Federfüllmaterial 10 bis 30 Gew.-% künstliche Federn umfasst und der Rest Daunen ist.

9. Künstliches Federfüllmaterial nach Anspruch 8, wobei das künstliche Federfüllmaterial ferner künstliche Daunencluster umfasst, wobei jedes der Daunencluster eine Anzahl von Filamenten umfasst, die Seite an Seite in einem Bündel angeordnet sind, wobei die Filamente an einer Verbindungsstelle miteinander schmelzverbunden sind; wobei die Filamente vorzugsweise gekräuselt sind.

10. Artikel, der mit dem künstlichen Federfüllmaterial nach einem der Ansprüche 1 bis 9 gefüllt ist, wobei der Artikel aus der Gruppe ausgewählt ist, die aus einem Kissen, einem Quilt, einem Schlafsack und einem Polsterelement besteht.

11. Verfahren zum Herstellen eines künstlichen Federfüllmaterials, wobei das Verfahren die folgenden Schritte umfasst:
- Zuführen mindestens eines Filaments (10) und einer ersten Bahn (25) aus einem Fasermaterial, wobei das Fasermaterial eine Lage aus Vliesmaterial ist, wobei das Vliesmaterial ein verbundenes Material ist, zu einem Kalander (41) mit mindestens einer Walze (42) und einer Heizanordnung (44) zum Erwärmen der ersten Bahn;
- Bilden, stromabwärts oder stromaufwärts des Kalanders (41), mindestens eines Bands (26) aus der ersten Bahn (25), wobei das Filament (10) entlang des Bands (26) angeordnet ist;
- Verbinden, wie etwa Schmelzverbinden, des Filaments (10) mit dem Fasermaterial durch den Kalander (41); und
- Querschneiden des Bands (26) und des Filaments (10), um künstliche Federn (1) zu bilden.

12. Verfahren zum Herstellen eines künstlichen Federfüllmaterials nach Anspruch 11, wobei das Filament (10) mittig auf dem Band (26) angeordnet ist; und/oder wobei das Filament (10), das dem Kalander (41) zugeführt wird, zwischen der ersten Bahn (25) und einer zweiten Bahn (35) aus einem Fasermaterial angeordnet ist.

13. Verfahren zum Herstellen eines künstlichen Federfüllmaterials nach Anspruch 11 oder 12, wobei der Kalander (41) mindestens zwei rotierende Walzen (42, 45) zum Kalandrieren der ersten Bahn (25) und des Filaments (10) dazwischen umfasst, wobei mindestens eine der Walzen (42, 45) erwärmt wird, wobei der Kalander (41) ferner eine Kühlwalze (46) umfasst, die stromabwärts der mindestens einen Walze (42, 45), die erwärmt wird, angeordnet ist, wobei der Radius der Kühlwalze (46) vorzugsweise 25 bis 400 mm, wie etwa 50 bis 200 mm, beträgt,
wobei der Kalander (41) so angeordnet ist, dass die erste Bahn (25) und optional das Filament (10) über mindestens 5 %, 10 %, 25 % oder 50 % ihres Umfangs beim Kalandrieren mit der Kühlwalze (46) in Kontakt stehen, wodurch das Filament (10) mit der Form eines Bogens versehen wird; und/oder
wobei der Durchmesser der Kühlwalze (46) entlang ihrer Längserstreckung variiert, wodurch der Querschnitt des Bands/der Bänder (26), in einer Richtung senkrecht zu der Erstreckung des Filaments (10) gesehen, auf jeder Seite des Filaments (10) gekrümmt ist, wobei die Krümmung (21) vorzugsweise die Form eines Kreisbogens aufweist.

14. Verfahren zum Herstellen eines künstlichen Federfüllmaterials nach einem der Ansprüche 11 bis 13, wobei der Kalander (41) mindestens zwei rotierende Walzen (42, 45) zum Kalandrieren der ersten Bahn (25) und des Filaments (10) dazwischen umfasst, wobei mindestens eine der Walzen (42, 45) erwärmt wird, wobei mindestens eine der Walzen (42, 45) geprägt ist, wodurch die erste Bahn (25) mit einem Muster, wie etwa einem federähnlichen Fischgrätenmuster, versehen wird; wobei die erste Bahn (25) vorzugsweise mit einer zweiten Bahn (35) aus einem Fasermaterial schmelzverbunden wird, wenn das Filament (10), das dem Kalander (41) zugeführt wird, zwischen der ersten Bahn (25) und einer zweiten Bahn (35) aus einem Fasermaterial angeordnet ist.

15. Verfahren zum Herstellen eines künstlichen Federfüllmaterials nach einem der Ansprüche 11 bis 14, wobei mindestens zwei Filamente (10) separat parallel auf der ersten Bahn (25) angeordnet sind, um dem erwärmten Kalander (41) zugeführt zu werden, wobei das Verfahren ferner den Schritt des Schneidens der ersten Bahn (25) zwischen den Filamenten (10) vor oder nach, vorzugsweise nach, dem Verbinden der Filamente (10) mit der ersten Bahn (25) umfasst, wodurch mindestens zwei Bänder (26) bereitgestellt werden, wobei jedes Band (26) ein Filament (10) umfasst, wobei die mindestens zwei Bänder (26) nach dem Schneiden der ersten Bahn (25) zwischen den Filamenten (10) zu künstlichen Federn (1) geschnitten werden.

16. Vorrichtung (40) zum Herstellen eines künstlichen Federfüllmaterials, wobei die Vorrichtung (40) mindestens zwei drehbare Walzen (42, 45) zum Kalandrieren der ersten Bahn (25) eines Fasermaterials und eines Filaments (10) dazwischen und eine Heizanordnung (44) zum Erwärmen der ersten Bahn (25) eines zu kalandisierenden Fasermaterials umfasst, wodurch das Filament (10) mit der ersten Bahn (25) schmelzverbunden wird, wobei vorzugsweise mindestens eine der Walzen (42, 45) mit einer Heizung (44) versehen ist, wobei die Vorrichtung (40) ferner eine erste Schneidanordnung (50) zum Schneiden der ersten Bahn (25) in Bänder (26) umfasst, wobei ein Filament (10) entlang jedes der Bänder (26) angeordnet ist, wobei die erste Schneidanordnung (50) entweder stromaufwärts oder stromabwärts der drehbaren Walzen (42, 45) angeordnet ist, und eine zweite Schneidanordnung (60), die stromabwärts der ersten Schneidanordnung (50) und der drehbaren Walzen (42, 45) angeordnet ist, zum Querschneiden der Bänder (26) zu künstlichen Federn (1), wobei die Vorrichtung (40) eine Kühlwalze (46) umfasst, die stromabwärts der Heizanordnung (44) angeordnet ist, wobei die Vorrichtung (40) konfiguriert ist, um so betrieben zu werden, dass die Kühlwalze (46) beim Kalandrieren der ersten Bahn (25) des Fasermaterials und des Filaments (10) über mindestens 5 %, 10 %, 25 % oder 50 % ihres Umfangs mit der ersten Bahn (25) des Fasermaterials und optional dem Filament (10) in Kontakt steht; wobei vorzugsweise mindestens eine der Walzen (42, 45) des Kalanders geprägt ist.

## Revendications

1. Matériau de remplissage de plumes artificielles, comprenant des plumes artificielles (1) comprenant individuellement une première feuille (20) d'un premier matériau non tissé, le matériau non tissé étant un matériau lié, dans lequel un filament (10) est disposé le long d'une première étendue de ladite feuille, le filament (10) étant lié à la première feuille (20), dans lequel la première feuille est une bande, le filament étant disposé le long de l'étendue longitudinale de ladite bande.

2. Matériau de remplissage de plumes artificielles selon la revendication 1, dans lequel le filament (10), tel qu'un monofilament, est disposé de manière centrale le long de l'étendue longitudinale de ladite bande ; et/ou dans lequel le filament (10) est lié par fusion à la première feuille (20) d'un premier matériau non tissé.

3. Matériau de remplissage de plumes artificielles selon la revendication 1 ou la revendication 2, dans lequel la plume artificielle (1) comprend en outre une seconde feuille (30), telle qu'une bande, d'un second matériau non tissé, le filament (10) étant disposé entre la première feuille (20) et la seconde feuille (30) d'un ou de plusieurs matériaux non tissés, dans lequel le filament (10) est également lié, tel que lié par fusion, à la seconde feuille (30) ; la première feuille (20) étant de préférence liée à la seconde feuille (30) ; la première feuille (20) étant plus idéalement liée par fusion à la seconde feuille (30).

4. Matériau de remplissage de plumes artificielles selon la revendication 3, dans lequel la première feuille (20) est liée à la seconde feuille (30), la liaison prenant la forme d'une multitude de lignes de liaison (22) ; les lignes de liaison (22) étant de préférence disposées pour ressembler aux barbes en plumes naturelles, formant ainsi une forme d'arête de poisson, de type plume conjointement avec le filament (10).

5. Matériau de remplissage de plumes artificielles selon l'une quelconque des revendications 1 à 4, dans lequel le premier matériau non tissé, et le second matériau non tissé s'il est présent :
- a un grammage de 1 à 50 g/m², tel que de 5 à 30 g/m² ; et/ou
- est un non-tissé filé-lié et/ou de fusion-soufflage ; et/ou
- comprend des fibres ayant une masse linéique de 0,5 à 10 dtex, telle que de 1 à 5 dtex ; et/ou comprend des fibres ayant un diamètre moyen de 0,1 µm à 30 µm, tel que de 5 µm à 30 µm pour un non-tissé filé-lié, ou de 0,1 µm à 15 µm pour un non-tissé de fusion-soufflage ; et/ou
dans lequel le filament (10) est une fibre bi-composant, telle qu'une fibre bi-composant gaine-âme, et/ou le filament (10) est creux, et/ou le filament (10) a une dimension de section transversale la plus grande de 0,05 à 1 mm ; de préférence de 0,4 à 0,6 mm.

6. Matériau de remplissage de plumes artificielles selon la revendication 5, dans lequel le filament (10) est une fibre bi-composant gaine-âme, la gaine comprenant un polymère ayant un point de fusion d'au moins 20 °C inférieur au point de fusion d'un polymère compris dans l'âme ; l'âme comprenant de préférence un polyester ayant un point de fusion d'au moins 220 °C, et la gaine ayant un point de fusion inférieur à 200 °C, tel que compris entre 110 °C et 190 °C.

7. Matériau de remplissage de plumes artificielles selon l'une quelconque des revendications 1 à 6, dans lequel le filament (10) a la forme d'un arc, tel qu'un arc circulaire ; le rayon étant de préférence de 25 à 400 mm, tel que de 50 à 200 mm ; et/ou
dans lequel la section transversale de la première feuille (20) perpendiculairement à l'étendue du filament (10), de chaque côté du filament (10), est courbée ; la courbure (21) ayant de préférence la forme d'un arc circulaire, la section transversale de la plume artificielle (1), telle qu'observée perpendiculairement à l'étendue du filament (10), a de préférence la forme d'un goéland en vol, telle qu'observée à partir de la tête.

8. Matériau de remplissage de plumes artificielles selon l'une quelconque des revendications 1 à 7, dans lequel le matériau de remplissage de plumes artificielles comprend en outre du duvet ; le duvet étant de préférence un duvet artificiel, le matériau de remplissage de plumes artificielles comprenant de préférence de 5 à 95 % par poids de plumes artificielles et de 5 à 95 % par poids de duvet, tel que de 5 à 50 % par poids de plumes artificielles et de 50 à 95 % par poids de duvet, et/ou le matériau de remplissage de plumes artificielles comprenant une proportion pondérale de duvet supérieure à celle de plumes artificielles, et/ou le matériau de remplissage de plumes artificielles comprenant de 10 à 30 % par poids de plumes artificielles et le reste étant du duvet.

9. Matériau de remplissage de plumes artificielles selon la revendication 8, dans lequel le matériau de remplissage de plumes artificielles comprend en outre des grappes de duvet artificiel, dans lequel chacune des grappes de duvet comprend un nombre de filaments disposés côte à côte en un faisceau, les filaments étant liés par fusion les uns aux autres à un emplacement de liaison ; les filaments étant de préférence frisés.

10. Article rempli d'un matériau de remplissage de plumes artificielles selon l'une quelconque des revendications 1 à 9, l'article étant sélectionné dans le groupe constitué d'un oreiller, d'une courtepointe, d'un sac de couchage et d'un élément coussin.

11. Procédé de production d'un matériau de remplissage de plumes artificielles, ledit procédé comprenant les étapes :
- alimenter au moins un filament (10) et une première bande continue (25) d'un matériau fibreux, dans lequel le matériau fibreux est une feuille de matériau non tissé, le matériau non tissé étant un matériau lié, vers une calandre (41) dotée d'au moins un rouleau (42) et d'un agencement chauffant (44) destiné à chauffer la première bande continue ;
- former, en aval ou en amont de la calandre (41), au moins un ruban (26) à partir de la première bande continue (25), le filament (10) étant disposé le long du ruban (26) ;
- lier, tel que lier par fusion, le filament (10) au matériau fibreux par la calandre (41) ; et
- couper transversalement le ruban (26) et le filament (10) pour former des plumes artificielles (1).

12. Procédé de production d'un matériau de remplissage de plumes artificielles selon la revendication 11, dans lequel le filament (10) est disposé de manière centrale sur le ruban (26) ; et/ou le filament (10) qui est alimenté vers la calandre (41) est disposé entre la première bande continue (25) et une seconde bande continue (35) d'un matériau fibreux.

13. Procédé de production d'un matériau de remplissage de plumes artificielles selon la revendication 11 ou la revendication 12, dans lequel la calandre (41) comprend au moins deux rouleaux rotatifs (42, 45) destinés à calandrer entre eux la première bande continue (25) et le filament (10), au moins l'un des rouleaux (42, 45) étant chauffé, la calandre (41) comprenant en outre un rouleau de refroidissement (46) disposé en aval de l'au moins un rouleau (42, 45) qui est chauffé, le rayon du rouleau de refroidissement (46) étant de préférence de 25 à 400 mm, tel que de 50 à 200 mm,
dans lequel la calandre (41) est disposée de sorte que la première bande continue (25) et éventuellement le filament (10) soient en contact avec le rouleau de refroidissement (46) sur au moins 5 %, 10 %, 25 % ou 50 % de sa circonférence lors de leur calandrage, donnant ainsi au filament (10) la forme d'un arc ; et/ou
dans lequel le diamètre du rouleau de refroidissement (46) varie sur son étendue longitudinale, moyennant quoi la section transversale du ou des rubans (26), telle qu'observée dans une direction perpendiculaire à l'étendue du filament (10), de chaque côté du filament (10) est courbée, la courbure (21) ayant de préférence la forme d'un arc circulaire.

14. Procédé de production d'un matériau de remplissage de plumes artificielles selon l'une quelconque des revendications 11 à 13, dans lequel la calandre (41) comprend au moins deux rouleaux rotatifs (42, 45) destinés à calandrer entre eux la première bande continue (25) et le filament (10), au moins l'un des rouleaux (42, 45) étant chauffé, dans lequel au moins l'un des rouleaux (42, 45) est gaufré, moyennant quoi la première bande continue (25) est pourvue d'un motif, tel qu'un motif d'arête de poisson, de type plume ; la première bande continue (25) étant de préférence liée par fusion à une seconde bande continue (35) d'un matériau fibreux, si le filament (10) qui est alimenté vers la calandre (41) est disposé entre la première bande continue (25) et une seconde bande continue (35) d'un matériau fibreux.

15. Procédé de production d'un matériau de remplissage de plumes artificielles selon l'une quelconque des revendications 11 à 14, dans lequel au moins deux filaments (10) sont disposés séparément en parallèle sur la première bande continue (25) à alimenter vers la calandre chauffée (41), le procédé comprenant en outre l'étape consistant à couper la première bande continue (25) entre les filaments (10) avant ou après, de préférence après, la liaison des filaments (10) à la première bande continue (25), fournissant ainsi au moins deux rubans (26), chaque ruban (26) comprenant un filament (10), dans lequel les au moins deux rubans (26) sont coupés en plumes artificielles (1) à la suite de la coupe de la première bande continue (25) entre les filaments (10) .

16. Appareil (40) de production d'un matériau de remplissage de plumes artificielles, l'appareil (40) comprenant au moins deux rouleaux mobiles en rotation (42, 45) destinés à calandrer entre eux la première bande continue (25) d'un matériau fibreux et un filament (10) et un agencement chauffant (44) destiné à chauffer la première bande continue (25) d'un matériau fibreux à calandrer, liant ainsi par fusion le filament (10) à la première bande continue (25), au moins l'un des rouleaux (42, 45) étant de préférence pourvu d'un élément chauffant (44), l'appareil (40) comprenant en outre un premier agencement de coupe (50) destiné à couper la première bande continue (25) en rubans (26), un filament (10) étant disposé le long de chacun des rubans (26), le premier agencement de coupe (50) étant disposé soit en amont soit en aval des rouleaux mobiles en rotation (42, 45), et un second agencement de coupe (60), disposé en aval du premier agencement de coupe (50) et des rouleaux mobiles en rotation (42, 45), destiné à couper transversalement les rubans (26) en plumes artificielles (1), dans lequel l'appareil (40) comprend un rouleau de refroidissement (46) disposé en aval de l'agencement chauffant (44), l'appareil (40) étant configuré pour être mis en oeuvre de sorte que le rouleau de refroidissement (46) soit en contact avec la première bande continue (25) du matériau fibreux et éventuellement avec le filament (10) sur au moins 5 %, 10 %, 25 % ou 50 % de sa circonférence lors du calandrage de la première bande continue (25) du matériau fibreux et du filament (10) ; au moins l'un des rouleaux (42, 45) de la calandre étant de préférence gaufré.
